(19) Europäisches Patentamt / European Patent Office / Office européen des brevets

(11) **EP 1 483 571 B1**

(12) **EUROPÄISCHE PATENTSCHRIFT**

(45) Veröffentlichungstag und Bekanntmachung des Hinweises auf die Patenterteilung:
**25.11.2009 Patentblatt 2009/48**

(21) Anmeldenummer: **03720328.8**

(22) Anmeldetag: **12.03.2003**

(51) Int Cl.:
*G01N 27/12* (2006.01)

(86) Internationale Anmeldenummer:
**PCT/EP2003/002544**

(87) Internationale Veröffentlichungsnummer:
**WO 2003/076921 (18.09.2003 Gazette 2003/38)**

(54) **MIKROSTRUKTURIERTER GASSENSOR MIT STEUERUNG DER GASSENSITIVEN EIGENSCHAFTEN DURCH ANLEGEN EINES ELEKTRISCHEN FELDES**

MICRO-STRUCTURED GAS SENSOR WITH CONTROL OF GAS SENSITIVE PROPERTIES BY APPLICATION OF AN ELECTRIC FIELD

CAPTEUR DE GAZ A MICROSTRUCTURES AVEC COMMANDE DES PROPRIETES DE SENSIBILITE AUX GAZ PAR APPLICATION D'UN CHAMP ELECTRIQUE

(84) Benannte Vertragsstaaten:
**CH DE GB IT LI NL**

(30) Priorität: **12.03.2002 DE 10210819**

(43) Veröffentlichungstag der Anmeldung:
**08.12.2004 Patentblatt 2004/50**

(73) Patentinhaber: **Micronas GmbH**
**79108 Freiburg i. Br. (DE)**

(72) Erfinder:
- **DOLL, Theodor**
  **99310 Arnstadt (DE)**
- **BÖTTNER, Harald**
  **79108 Freiburg (DE)**
- **WÖLLENSTEIN, Jürgen**
  **79106 Freiburg (DE)**
- **JÄGLE, Martin**
  **79350 Sexau (DE)**
- **LEHMANN, Mirko**
  **79102 Freiburg (DE)**

(74) Vertreter: **Göhring, Robert**
**Westphal - Mussgnug & Partner**
**Patentanwälte**
**Am Riettor 5**
**78048 Villingen-Schwenningen (DE)**

- HELLMICH W ET AL: "Field-effect-induced gas sensitivity changes in metal oxides" SENSORS AND ACTUATORS B, ELSEVIER SEQUOIA S.A., LAUSANNE, CH, Bd. 43, Nr. 1-3, 1. September 1997 (1997-09-01), Seiten 132-139, XP004103404 ISSN: 0925-4005
- STORM U ET AL: "A resistive gas sensor with elimination and utilization of parasitic electric fields" SENSORS AND ACTUATORS B, ELSEVIER SEQUOIA S.A., LAUSANNE, CH, Bd. 77, Nr. 1-2, 15. Juni 2001 (2001-06-15), Seiten 529-533, XP004246604 ISSN: 0925-4005 in der Anmeldung erwähnt
- SCHEINERT M ET AL: "Electrically controlled metal oxide gas sensor designed with PROSA-CHEM" PROCEEDINGS OF IEEE SENSORS 2002. ORLANDO, FL, JUNE 12 - 14, 2002, IEEE INTERNATIONAL CONFERENCE ON SENSORS, NEW YORK, NY: IEEE, US, Bd. 1 OF 2. CONF. 1, 12. Juni 2002 (2002-06-12), Seiten 356-360, XP010605117 ISBN: 0-7803-7454-1
- BOGNER M ET AL: "Electrical field impact on the gas adsorptivity of thin metal oxide films" APPLIED PHYSICS LETTERS, AMERICAN INSTITUTE OF PHYSICS. NEW YORK, US, Bd. 73, Nr. 17, 26. Oktober 1998 (1998-10-26), Seiten 2524-2526, XP002134967 ISSN: 0003-6951

(56) Entgegenhaltungen:
**DE-A- 4 442 396**

- SCHARNAGL K ET AL: "Enhanced room temperature gas sensing with metal oxides by means of the electroadsorptive effect in hybrid suspended gate FET" SENSORS AND ACTUATORS B, ELSEVIER SEQUOIA S.A., LAUSANNE, CH, Bd. 57, Nr. 1-3, 7. September 1999 (1999-09-07), Seiten 35-38, XP004252981 ISSN: 0925-4005

- EISELE I ET AL: "Low power gas detection with FET sensors" SENSORS AND ACTUATORS B, ELSEVIER SEQUOIA S.A., LAUSANNE, CH, Bd. 78, Nr. 1-3, 30. August 2001 (2001-08-30), Seiten 19-25, XP004297630 ISSN: 0925-4005

**Beschreibung**

Die Erfindung betrifft einen mikrostrukturierten Gassensor gemäß den Merkmalen des Oberbegriffs des Anspruchs 1.

Solche mikrostrukturierten Gassensoren sind z. B. in DE 44 42 396 A1 und DE 195 44 303 A1 beschrieben. Weitere integrierte Gassensoren sind z. B. aus Hellmich W. et al: "Field-effectinduced gas sensitivity changes in metal oxides", Sensors and Actuators B, Elsevier Sequoia S.A., Lausanne, CH, Bd. 43, Nr. 1-3, 1. September 1997 (1997-09-01), Seiten 132-139, bekannt.

Bei der Messung von Luftschadstoffkonzentrationen im ppm- und ppb-Bereich wurden in den letzten Jahren zunehmend resistive Gassensoren eingesetzt. Hauptvorteile solcher Halbleitergassensoren ist ihre kostengünstige Herstellung, kombiniert mit einer einfachen Möglichkeit zur hybriden Integration in elektronische Systeme zur Messwertaufbereitung. Halbleitergassensoren sind elektrische Leitfähigkeitssensoren. Bei Betriebstemperaturen von 50°C bis 900°C ändert sich der elektrische Widerstand der halbleitenden Schicht bei Kontakt mit dem zu detektierenden Gas. Diese reversible Reaktion macht den elektronischen Nachweis eines Gases möglich. Typische Nachweisgase sind $NO_X$, CO, Kohlenwasserstoffe, $NH_3$, $O_3$, $H_2O$. Sowohl die Elektrodenstrukturen als auch die gassensitiven Schichten dieser Sensoren werden vorwiegend in Dick- und Dünnschichttechnik ausgeführt. Als Materialien für die sensorisch aktiven Elemente sind halbleitende Metalloxide wie $SnO_2$, $WO_3$, $In_2O_3$, $Ga_2O_3$ $Cr_{2-x}Ti_xO_3$ etc. und organische Halbleiter gebräuchlich (Polypyrrol, Polyanilin, Phtalocanine) [1]. Hierbei wird üblicherweise über die Temperatur die chemische Reaktion an den halbleitenden Schichten beeinflusst.

Auf eine geeignete Substratplattform sind bei diesen Anordnungen üblicherweise Heizer und Temperaturfühlerstrukturen integriert. Auf derartigen Plattformen werden dann mit Methoden der Dickschicht- und Dünnschichttechnik die sensitiven Metalloxidschichten wie beispielsweise $SnO_2$ aufgebracht. Mit Hilfe der mikrostrukturierten Substratplattformen wird eine Konzentration der Wärmeentwicklung des Heizers auf die sensitive Fläche erreicht, während der Umgebungsbereich kalt bleiben kann. Dies ist beispielsweise vorteilhaft, um die Nachweiselektronik auf dem kalten Substratteil unterzubringen [2]. Die thermische Entkopplung erfolgt beispielsweise über dünne Membranen aus $SiO_2/Si_3N_4$ oder sogenannte Hotplate-Strukturen [3].

Halbleiter-Gassensoren (Metalloxidsensoren) basieren auf dem (vereinfachten) Funktionsprinzip, daß Gasmoleküle an Halbleiteroberflächen adsorbieren und dabei zu einem gewissen Anteil mit dem Halbleiter eine chemische Bindung eingehen (Chemisorption). Dabei werden Elektronen im Halbleiter-Adsorbatkomplex lokalisiert/gebunden bzw. von ihm freigesetzt. Im Bändermodell des Halbleiters entspricht dies einer Besetzung eines Oberflächenzustandes (mit Elektronen oder Löchern), der in seiner energetischen Lage nahe der Fermienergie in der Bandlücke lokalisiert sein muß [4].

Da die gebundenen Ladungsträger für den Stromtransport nicht mehr zur Verfügung stehen, wird diese Umbesetzung von Oberflächenzuständen üblicherweise mit Leitfähigkeitssensoren detektiert. Eine in etwa äquivalente, bislang industriell ungenutzte Messmöglichkeit sind Oberflächenpotentialsensoren (z.B. SGFET) [5,6]. Zentraler Nachteil der bisherigen Anordnungen (z.B. SGFET) ist das kein Design den planaren Herstellungsverfahren der üblichen Halbleiterfertigung Rechnung trägt.

Durch die Umbesetzung von Oberflächenzuständen werden die energetischen Niveaus (Lage des Ferminiveaus) verschoben. Dies wiederum hat rückwirkende Auswirkungen auf die Oberflächenzustände selbst, da die zur Verfügung stehenden energetischen Niveaus nun anders verteilt sind. Dies ist z.B. der Grund, warum nur ein Teil der adsorbierten Gasmoleküle in den chemisorbierten Zustand überwechseln können, da sich mit der Lage des Ferminiveaus unter Chemisorption die Besetzungswahrscheinlichkeit des Oberflächenzustandes verringert (Selbsthemmung, "Weisz-Effekt") [7].

Weiterhin ist aus den Grundlagen der Halbleiterelektronik bekannt, dass die Lage des Ferminiveaus nicht nur durch die Temperatur und die Dotierung sondern auch durch elektrische Felder beeinflusst werden kann. Bei den Gassensoren des Standes der Technik wird die Lage des Ferminiveaus über die Temperatur vorgenommen, in der vorliegenden Erfindung über elektrische Felder. Dies ist auch unter dem Begriff Elektroadsorption bekannt. Wird deshalb an einer gasempfindlichen Halbleiteroberfläche ein elektrisches Feld eingeprägt, so wird über die damit hervorgerufene Verschiebung des Ferminiveaus, die Adsorptionswahrscheinlichkeit (Chemisorption und Physisorption) von Gasen an diesen Oberflächen steuerbar gemacht. Damit werden Gassensoren in ihrer Empfindlichkeit auf verschiedene Gase elektrisch modulierbar. Damit hat man einen leistungslosen einstellbaren Parameter für Gassensoren zur Verfügung, der die Empfindlichkeitsmolulation über die Heizertemperatur bezüglich Ansprechzeit und Selektivität erheblich erweitern kann.

Dieser Elektroadsorptive Effekt wurde 1957 von Fedor Wolkenstein postuliert [8]. Weil aber sehr hohe elektrische Felder (nahe des dielektrischen Durchbruchs der Luft) benötigt werden, dauerte es bis in das Jahr 1968, in dem Hoenig und Lane [9] mit großem experimentellen Aufwand das Auftreten dieses Effektes an einer dünnen Zinkoxidschicht, die in einem Plattenkondensator verbracht wurde, experimentell nachwiesen.

Das Potential, das in dieser elektrischen Sensitivitätssteuerung von MST-Gassensoren liegt, wurde von diesen Gruppen [10],[11],[12] unmittelbar erkannt, allerdings wurde bislang noch kein Gassensor entwickelt, dessen Design auf die vertikale elektrische Steuerbarkeit seiner Empfindlichkeit ausgelegt ist.

Die Erfindung verfolgt das Ziel einer verbessertes Gassensorik durch die Ausnutzung des elektroadsorptiven Effektes mit kleinen und kostengünstigen Sensoren, die u.a. in der Produktions- und Prozessmesstechnik, im Automobilbereich, in der Sicherheitstechnik und in der Klima- und Umweltsensorik eingesetzt werden können. Mit der Erfindung können Halbleitergassensoren mit deutlich besseren Eigenschaften als bisher realisiert werden. Insbesondere soll der erfindungsgemäße Gassensor hinsichtlich seiner Selektivität erhöht sein und mit niedrigeren Betriebstemperaturen, also bei deutlich unter 300° Celsius, arbeiten können.

Dieses Ziel wird durch einen mikrostrukturierten Gassensor mit den Merkmalen des Anspruchs 1 gelöst.

Weiterbildungen dieses Gassensors sind in den Unteransprüchen angegeben.

Die Erfindung beruht auf Gassensoren, die auf der Basis gassensitiver halbleitender Materialien arbeiten. Im Gegensatz zu den bekannten Gassensoren aus halbleitendem Material, bei denen eine Widerstandsänderung in der Widerstandsschicht allein durch zwei Elektroden ausgelesen werden, sind bei den erfindungsgemäßen Sensoren zusätzlich mehrere Elektroden, zur Selektivitätssteuerung innerhalb des Halbleiterkörpers des Gassensors vorhanden. Dabei befinden sich diese weiteren Elektroden unterhalb der Widerstandsschicht und sind von dieser durch eine Isolierschicht getrennt. Diese weiteren Elektroden dienen zum Einkoppeln eines auf den Halbleiter wirkenden elektrischen Feldes. Ausgenutzt wird hierbei der Einfluss von elektrischen Feldern auf die Gasreaktion der sensitiven Schicht. Dazu ist es nötig, dass ein über eine Feldelektrode in den Halbleiterkörper des Gassensors eingekoppeltes elektrisches Feld bis auf die dem Gas zugewandte Oberfläche der gassensitiven Schicht wirkt. D.h. die über der Gateelektrode liegenden Schichten dürfen das elektrische Feld nicht abschirmen. Ein Maß für die Abschirmlänge bei Halbleitern ist die Debyelänge $L_D$. Erfindungsgemäß hat die zwischen Widerstandsschicht und weiteren Elektroden befindliche Isolierschicht eine maximale Dicke, die mindestens annähernd kleiner etwa gleich der Debyelänge des eingesetzten Isoliermaterials entspricht.

Dabei ist die Debyelänge $L_D$ folgendermaßen definiert:

$$L_D = \sqrt{\frac{\varepsilon \varepsilon_0 kT}{q^2 N}}$$

wobei

T     Temperatur
$\varepsilon$     Materialabhängige Dielektrizitätszahl
$\varepsilon_0$     Dielektrizitätskonstante
k     Bolzmannkonstante

N     Ladungsträgerkonzentration
q     Elementarladung

bedeuten.

$L_D$ liegt z.B. bei dem häufig eingesetzten gas sensitiven Material $SnO_2$ bei ca. 60 bis 80 mm. Die Abschirmlänge bei Isolatoren ist theoretisch sehr groß. Durch Verunreinigungen bzw. Störstellen und Grenzflächenzuständen bei einem realen Bauteil sollte aber die Dicke der Isolatorschicht 300 nm nicht überschreiten, damit noch ein genügend starkes elektrisches Feld in das sensitive Material des Gassensors eingekoppelt werden kann.

In den Halbleiterkörper des Gassensors ist erfindungsgemäß eine Vielzahl von weiteren Elektroden angeordnet. Durch diese Ausbildung, die mit der oben erwähnten Dimensionierung der Isolierschicht eingesetzt wird, ist es möglich ganz gezielt den Gradienten im Oberflächenpotentialverlauf, der durch den Potentialabfall zwischen den zwei Elektroden der Widerstandsschicht bedingt ist, entgegenzuwirken.

Die erfindungsgemäßen Sensoren bestehen aus halbleitenden Materialien (wie z.B. den Metalloxiden: $Sn2$, $WO_3$, $In_2O_3$, $Ga_2O_3$ $Cr_{2-x}Ti_xO_{3+z}$ etc. oder organischen Halbleitern) unter denen getrennt durch eine Isolatorschicht mehrere weitere Elektroden, im folgenden Feldelektroden genannt, angebracht sind.

Die erfindungsgemässen Anordnungen zeichnen sich unter anderem dadurch aus, dass sie auf in der Mikroelektronik üblichen Substraten strukturiert werden (wie Silizium und Siliziumdioxid). Zudem ist es auch möglich auf anderen in der Gassensorik üblichen Substraten wie $Al_2O_3$ (inkl. Saphir) in seinen üblichen Ausführungsformen aufzubauen.

Besonders zweckmäßig ist ein Isolatormaterial zwischen Steuerelektroden und Halbleiter zu verwenden, dass einer hohen Durchbruchsfeldstärke widersteht und elektrische Felder nicht abschirmt.

Folgende Verbesserungen und Vorteile gegenüber dem Stand der Technik lassen sich mit dem erfindungsgemäßen Gassensor nennen:

Übliche Gassensoren werden bei hohen Temperaturen (250°-900°C) betrieben (Grund: Beeinflussung von Absorption s.o.). Mit der erfindungsmäßigen Anordnung lassen sich die Betriebstemperaturen auf Werte unter 200°C reduzieren.

Von der erfindungsmäßigen Anordnung ist durch Ausnutzen des elektroadsorptiven Effektes eine verbesserte Selektivität der Sensoren auf ein Zielgas zu erwarten.

Die Vorzüge einer niedrigen Betriebstemperatur werden noch deutlicher durch die Möglichkeit der Integration von CMOS-AuswerteElektronik auf dem Sensor-Chip.

Die wie oben beschriebenen Sensoranordnungen lassen sich durch Ausnutzen des elektroadsorptiven Effektes als integraler Sensor betreiben (Dosimeter).

Durch Modulieren der Gatespannung kann noch ein kinetischer Effekt eingeführt werden. Ein Betrieb mit einer nicht-stationären Gatespannung verschiebt periodisch das Fermi-Niveau im Metalloxid, d.h. Veränderung des elektrochemischen Gleichgewichtes unter dem Einfluss einer externen Spannung an den Feldelektroden. Durch die periodische Modulation der Gatespannung kommt es zu wechselförmigen Widerstandsänderung der sensitiven Schicht. Durch Spektralanalyse dieser wechselförmigen Widerstandsänderung erscheint es möglich, verschiedenen Frequenzkomponenten verschiedene Gase zuzuordnen und damit eine Selektivitätssteigerung zu erreichen.

Die Möglichkeit der elektrischen Desorption von adsorbierten Gasen, die mit einem starken Feldpuls von der Oberfläche der sensitiven Schicht vertrieben werden können. Auf diese Weise wird ein Ausgangszustand (Baseline-Nullung) der Sensoren im laufenden Betrieb wiederhergestellt.

Eine Kombination der Temperaturvariation des Sensors mit der Feldsteuerung ist möglich.

Die alternativen Betriebsarten des steuerbaren Sensors im linearen/aktiven Bereich des Dünnfilmtransistors sind möglich.

Die Erfindung wird nachfolgend anhand von Ausführungsbeispielen im Zusammenhang mit Figuren erläutert.

Es zeigen:

Fig. 1     Prinzipdarstellung der Wirkungsweise eines gassensiti- ven Sensors nach der Erfindung,

Fig. 2     eine erste nicht erfindungsgemäße Ausführungsform eines Gassensors mit einer einzigen im Halbleiterkörper befindlichen Feldelektrode,

Fig. 3     eine erfindungsgemäße Ausführungsform des Gassensors mit einer Vielzahl von im Halbleiterkörper befindlichen Feldelektroden, und

Fig. 4     ein CMOS-TFT-Gassensor mit Ansteuerelektronik im Schnittbild.

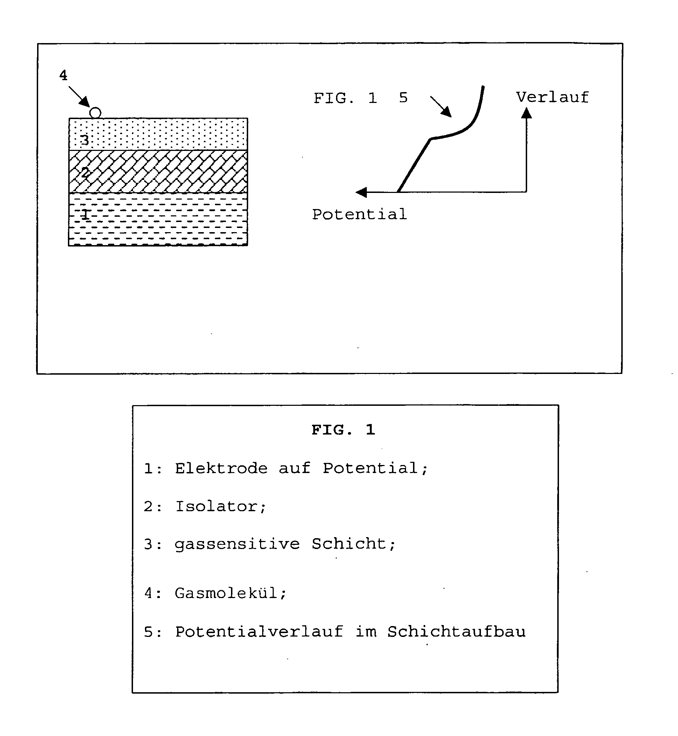

Der Hauptgedanke der Erfindung (siehe Fig. 1) ist folgender: Hat man eine Elektrode 1 unter einem gassensitiven Halbleiter 3 und einer Isolatorschicht 2, so kann der elektroadsorptive Effekt nur dann eintreten, wenn die Dicke des gassensitiven Halbleiters in der Grössenordnung der Debye-Länge $L_D$ ist. Dadurch kann die Oberflächenabsorption des Gases 4 durch das elektrische Feld beeinflusst werden. Des weiteren muss dafür Sorge getragen werden, dass der Isolator störstellenarm ist, da diese Störstellen die Debye-Länge des Isolators 5, beträchtlich heruntersetzt und damit ein Durchgreifen des Feldes auf die gassensitive Schicht verhindert. Beispiele von Debye-Längen für $SnO_2$ sind z.B. 60.80 nm, für einen realen Isolator liegen diese im Bereich unterhalb mehrere μm.

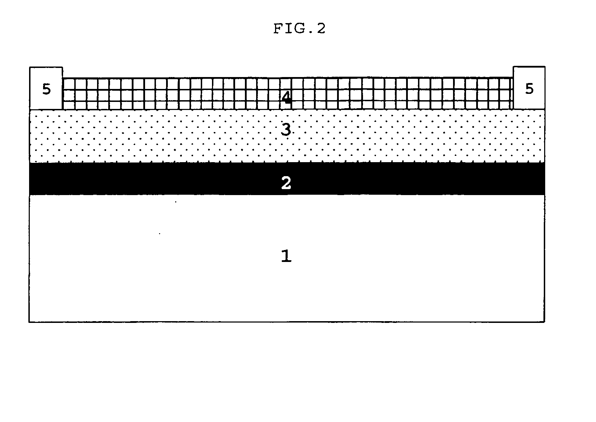

In Fig. 2 ist das Schnittbild eines nicht erfindungsgemäßen Ausführungsbeispiels des Gassensors gezeigt. Es ist ein Halbleitersubstrat 1 vorgesehen, auf welchem eine gassensitive Schicht mit einer Dicke von z.B. 59nm liegt. Diese gassensitive Schicht 4 ist von zwei Elektroden 5 kontaktiert. Die gassensitive Schicht kann bzw. aus $SnO_2$ bestehen. Die Debye-Länge dieser gassensitiven Schicht liegt bei ca. 80 nm. Unterhalb dieser gassensitiven Schicht 4 sitzt von einer Isolierschicht 3 getrennt eine Feldelektrode 2. Diese Feldelektrode 2 ist als Plattenelektrode ausgebildet und befindet sich ganzflächig unterhalb der gassensitiven Schicht 4. Die Isolierschicht 3 hat beispielsweise eine Dicke von 200 nm, die Debye-Länge dieser Schicht beträgt ca. 300 nm, wenn als Material Siliziumoxid für die Isolierschicht 3 verwendet wird.

Ein Mass für die Abschirmlänge bei Halbleitern ist die bereits erwähnte Debyelänge $L_D$

$$L_D = \sqrt{\frac{\varepsilon\varepsilon_0 kT}{q^2 N}}$$

Die Debye-Länge $L_D$ beträgt also bei den häufig eingesetzten gassensitiven Material $SnO_2$ ca. 60 bis 80 nm. Mit der oben erwähnten Dicke der Isolierschicht 3 von ca. 200 nm ist gewährleistet, dass ein genügend starkes elektrisches Feld über die Feldelektrode 2 in den Halbleiter eingekoppelt werden kann.

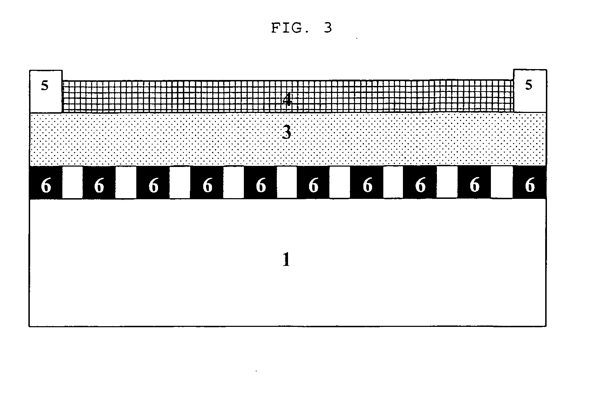

In Fig. 3 ist eine Ausführungsform des erfindungsgemäßen Gassensors gezeigt. Im Unterschied zu dem Gassensor von Fig. 2 befindet sich jetzt nicht eine einzige Feldelektrode unterhalb der gassensitiven Schicht, sondern eine Vielzahl von Mikroelektroden 6.

Die Verwendung von solchen zueinander beabstandeten Mikroelektroden hat folgenden Vorteil. Die gassensitiven Eigenschaften einer Halbleiterschicht sind vom Oberflächenpotential und damit der Lage des Fermi-Niveau der gaszugewandten Oberfläche der gassensitiven Schicht 4 abhängig. Dieser Effekt wird im vorliegenden Fall zur Sensitivität- und Selektivitätsteuerung ausgenutzt. Um diesen Effekt optimal ausnutzen zu können, ist es wünschenswert, ein konstantes Potential über die gesamte Halbleiteroberfläche der gassensitiven Schicht zu haben.

Legt man eine Spannung an die Elektroden 5 zum Auflesen des Widerstandes der gassensitiven Schicht 4 an die Elektroden 5 an, so kommt es zu einem Potentialabfall zwischen den beiden Elektroden 5 und zu einem Gradienten im Oberflächenpotential. Durch Anlegen unterschiedlicher Spannungen an die zueinander einzeln ausgeführten Mikroelektroden 6, die elektrisch zueinander isoliert unter der gassensitiven Schicht 4 innerhalb des Halbleitersubstrates 1 sitzen, ist es möglich, diesen Gradienten entgegen zu steuern und so ein konstantes Potential an der Halbleiteroberfläche einzustellen bzw. in gewünschte Richtungen zu schieben.

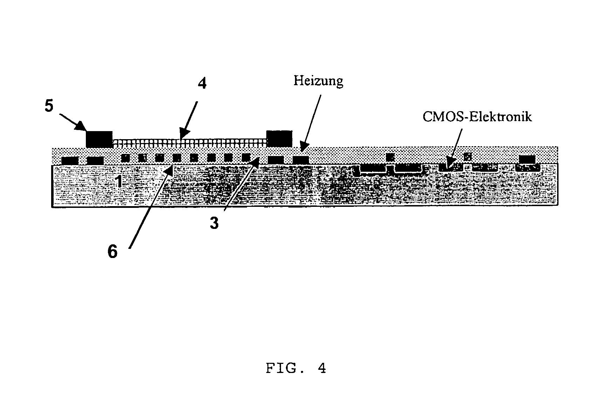

Die erfindungsgemässen Anordnungen verfügen über eine Heizung (vgl. Fig. 4) für die erforderlichen Arbeitstemperaturen größer 100°C. Der Chip muß auf über 100°C geheizt werden, da sonst adsorbiertes Wasser an der Oberfläche der sensitiven Schicht die Gasreaktion behindert. Diese Widerstandsheizung kann sich wie in Fig. 4 gezeigt vergraben in dem Substrat befinden oder auf der Oberfläche strukturiert sein. Da die Sensitivität von Halbleitergassensoren temperaturabhängig ist, ist es besonders günstig, wenn die Heizung steuerbar und/oder regelbar ist. Dazu ist es günstig einen Temperatursensor auf dem Sensorchip zu integrieren, dessen Signal zur Temperatur-Istwerterfassung eingesetzt werden kann.

Besonders zweckmäßig erscheint die erfindungsmässige Anordnung, um die Betriebstemperaturen üblicher Halbleitergassensoren (250°-900°C) auf Werte unter 180°C zu reduzieren. Als besondere Ausführungsform ist demnach auch eine Integration von CMOS-Schaltungen auf dem Sensorchip möglich.

Fig.4 zeigt den schematischen Aufbau eines erfindungsmäßigen Gassensors mit CMOS-Ansteuerelektronik.

VI Literatur

[1] Williams D.: Semiconducting oxides as gas-sensitive resistors, Sensors and Actuators B: Chemical B 57 (1-2) (1999) 1 - 16

[2] "On-chip thermally isolated hot-plate structure" A.Götz, C.Cane, H.Bottner, K.Seibert, German Patent Num. DE19944410.2

[3] I.Simon, N. Barsan , M.Bauer, U. Weimar: Micromachined metal oxide gas sensors: opportunities to improve sensor performance, Sensors and Actuators B 73 (2001) 1-26

[4] Geistlinger H.: Electron theory of thin-film gas sensors, Sens.&Act. B 17 (1993) 47-60

[5] T. Doll, M. Bögner, A. Fuchs, I. Eisele, Design and Fabrication of HSGFET Gas Sensors, Micro System Technologies 96 Proceedings

[6] Lundström, M.S. Shivaraman, L. Lundkvist, A hydrogensensitive MOS field-effect transistor, Appl. Phys. Lett. 26 1975 55-57.

[7] ] Weisz P.B.: Effects of electronic transfer between adsobate an solid on chemisorption and catalysis, Journal Chemical Physics, Vol 21, 1531-1538 (1953).

[8] Wolkenstein T.: Electronic Processes on Semiconductor Surfaces during Chemisorption, Consultant Bureau, New York & London, 1991.

[9] Hoenig, Lane, Oxygen an ZnO, Surface Science 11 (1968)

[10] W. Hellmich, G. Müller und G. Krötz; Verfahren und Vorichtung zur Bestimmung spezifischer Gasund Ionenkonzentrationen, Deutsche Patentanmeldung 1995

[11] U. Storm, O. Bartels and J. Binder, A resistive gas sensor with elimination and utilization of parasitic electric fields, Sensors and Actuators B: Chemical 77 (1-2) (2001) pp. 529-533

[12] E. Comini, A. Cristalli, G. Faglia and G. Sberveglieri, Light enhanced gas sensing properties of indium oxide and tin dioxide sensors, Sensors and Actuators B: Chemical 65 (1-3) (2000) pp. 260-263

[13] L.I. Popova, S.K. Andreev, V.K. Gueorguiev, N.D. Stoyanov, Voltage dependence gas-sensing behaviour of SnO2 -gate FETs, Sens. Actuators, B: Chem. 19 1994 543-545

**Patentansprüche**

1. Integrierter Gassensor mit einem Halbleiterkörper, auf welchem eine von Elektroden (5) kontaktierte gassensitive Widerstandsschicht (4) angeordnet ist, unter welcher von einer Isolierschicht (3) getrennt mindestens eine Feldelektrode (2; 6) sitzt, **dadurch gekennzeichnet, dass** die Isolierschicht (3) eine Dicke aufweist, die annähernd kleiner gleich der zu dieser Isolierschicht (3) entsprechenden Debye-Länge $L_D$ mit

$$L_D = \sqrt{\frac{\varepsilon \varepsilon_0 kT}{q^2 N}}$$

ist, wobei

T Temperatur
$\varepsilon$ Materialabhängige Dielektrizitätszahl
$\varepsilon_0$ Dielektrizitätskonstante
k Bolzmannkonstante
N Ladungsträgerkonzentration
q Elementarladung

bedeuten, wobei
als Feldelektrode eine Vielzahl von mikrostrukturierten Feldelektroden (6) vorgesehen ist.

**2.** Integrierter Gassensor nach Anspruch 1, **dadurch gekennzeichnet, dass** jede der mikrostrukturierten Feldelektroden (6) einzeln ansteuerbar ist.

**3.** Integrierter Gassensor nach einem der Ansprüche 1 bis 2, **dadurch gekennzeichnet, dass** in den Halbleiterkörper eine oder mehrere Heizelektroden integriert sind.

**4.** Integrierter Gassensor nach einem der Ansprüche 1 bis 3, **dadurch gekennzeichnet, dass** in den Halbleiterkörper eine Ansteuerelektronik für den Gassensor monolithisch integriert ist.

**5.** Integrierter Gassensor nach Anspruch 4, **dadurch gekennzeichnet, dass** die Ansteuerelektronik zur Temperatursteuerung vorgesehen ist.

**6.** Integrierter Gassensor nach einem der Ansprüche 1 bis 5, **dadurch gekennzeichnet, dass** die Dicke der gassensitiven Schicht (4) maximal etwa 100 mal größer ist als die Debye-Länge dieser gassensitiven Schicht.

**7.** Integrierter Gassensor nach Anspruch 1, **dadurch gekennzeichnet, dass** der Abstand zwischen den mikrostrukturierten Elektroden (6) in der Größenordnung der Korngröße der gassensitiven Schicht (4) zu bringen ist.

**8.** Integrierter Gassensor nach einem der Ansprüche 1 bis 7, **dadurch gekennzeichnet, dass** die Isolierschicht (3) eine hohe Durchbruchsfeldstärke ($Si_3N_4$; $Al_2O_3$; $SiO_2$) aufweist und elektrische Felder zumindest weitgehend nicht abschirmt.

**Claims**

**1.** Integrated gas sensor with a semi-conductor body, arranged on which is a gas-sensitive resistance layer (4) that is contacted by electrodes (5), under which layer sits at least one field electrode (2, 6) separated by an insulating layer (3), **characterised in that** the insulating layer (3) has a thickness that is approximately less than or equal to 10 times the Debye length $L_D$ corresponding to this insulating layer (3), where

$$L_D = \sqrt{(\varepsilon \, \varepsilon_0 \, kT) / q^2 N},$$

where

> T = temperature
> $\varepsilon$ = relative permittivity
> $\varepsilon_0$ = absolute permittivity
> k = Boltzmann's constant
> N = charge carrier concentration
> q = elementary charge

wherein
a plurality of micro-structured field electrodes (6) is provided as the field electrode.

**2.** Integrated gas sensor according to claim 1, **characterised in that** each of the micro-structured field electrodes (6) can be triggered individually.

**3.** Integrated gas sensor according to one of the claims 1 to 2, **characterised in that** integrated into the semi-conductor body is one or more heater electrodes.

**4.** Integrated gas sensor according to one of the claims 1 to 3, **characterised in that** integrated monolithically into the semi-conductor body are drive electronics for the gas sensor.

**5.** Integrated gas sensor according to claim 4, **characterised in that** the drive electronics are intended for controlling temperature.

**6.** Integrated gas sensor according to one of the claims 1 to 5, **characterised in that** the thickness of the gas-sensitive layer (4) is at most around 100 times greater than the Debye length of this gas-sensitive layer.

**7.** Integrated gas sensor according to claim 1, **characterised in that** the distance between the micro-structured electrodes (6) is to be of the order of the grain size of the gas-sensitive layer (4).

**8.** Integrated gas sensor according to one of the claims 1 to 7, **characterised in that** the insulating layer (3) has a high break-through field strength ($Si_3N_4$; $Al_2O_3$; $SiO_2$) and at least largely does not shield off electrical fields.

**Revendications**

**1.** Capteur de gaz, intégré, comportant un corps semi-conducteur portant une couche résistante (4), sensible aux gaz, mise en contact avec des électrodes (5), cette couche étant séparée par une couche isolante (3) d'au moins une électrode de champ (2; 6), **caractérisé en ce que** la couche isolante (3) a une épaisseur qui est au moins sensiblement inférieure ou égale à la longueur de Debye $L_D$ par rapport à la couche isolante (3) telle que :

$$L_D = \sqrt{\frac{\varepsilon\varepsilon_o kT}{q^2 N}}$$

formule dans laquelle

T Température
ε Permittivité dépendant de la matière
$\varepsilon_0$ Permittivité du vide
k Constante de Bolzmann
N Concentration des porteurs de charge
q Charge élémentaire

l'électrode de champ étant constituée par un grand nombre d'électrodes de champ microstructurées (6).

2. Capteur de gaz, intégré selon la revendication 1,
**caractérisé en ce que**
chacune des électrodes de champ, microstructurées (6) se commande individuellement.

3. Capteur de gaz, intégré selon les revendications 1 et 2,
**caractérisé en ce qu'**
une ou plusieurs électrodes chauffantes sont intégrées dans le corps semi-conducteur.

4. Capteur de gaz, intégré selon les revendications 1 à 3,
**caractérisé en ce qu'**
une électronique de commande du capteur de gaz est intégrée de manière monolithique dans le corps semi-conducteur.

5. Capteur de gaz, intégré selon la revendication 4,
**caractérisé en ce que**
l'électronique de commande assure la commande de la température.

6. Capteur de gaz, intégré selon les revendications 1 à 5,
**caractérisé en ce que**
l'épaisseur de la couche sensible aux gaz (4) est au maximum, environ 100 fois supérieure à la longueur de Debye de cette couche sensible aux gaz.

7. Capteur de gaz, intégré selon la revendication 1,
**caractérisé en ce que**
la distance entre les électrodes microstructurées (6) est de l'ordre de grandeur de la granulométrie de la couche (4) sensible aux gaz.

8. Capteur de gaz, intégré selon les revendications 1 à 7,
**caractérisé en ce que**
la couche isolante (3) a une forte intensité de champ de claquage ($Si_3N_4$; $Al_2O_3$; $SiO_2$) et n'arrête pas, au moins dans une large mesure, les champs électriques.

FIG. 1

Potential

Verlauf

## FIG. 1

1: Elektrode auf Potential;

2: Isolator;

3: gassensitive Schicht;

4: Gasmolekül;

5: Potentialverlauf im Schichtaufbau

FIG.2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4442396 A1
- DE 19544303 A1
- DE 19944410

**In der Beschreibung aufgeführte Nicht-Patentliteratur**

- Field-effectinduced gas sensitivity changes in metal oxides. **Hellmich W. et al.** Sensors and Actuators B. Elsevier Sequoia S.A, September 1997, vol. 43, 132-139
- **I.Simon ; N. Barsan ; M.Bauer ; U. Weimar.** Micromachined metal oxide gas sensors: opportunities to improve sensor performance. *Sensors and Actuators B,* 2001, vol. 73, 1-26
- **Geistlinger H.** Electron theory of thin-film gas sensors. *Sens.&Act. B,* 1993, vol. 17, 47-60
- **T. Doll ; M. Bögner ; A. Fuchs ; I. Eisele.** Design and Fabrication of HSGFET Gas Sensors. *Micro System Technologies 96 Proceedings,* 1996
- **Lundström ; M.S. Shivaraman ; L. Lundkvist.** A hydrogensensitive MOS field-effect transistor. *Appl. Phys. Lett.,* 1975, vol. 26, 55-57
- **Weisz P.B.** Effects of electronic transfer between adsobate an solid on chemisorption and catalysis. *Journal Chemical Physics,* 1953, vol. 21, 1531-1538
- **Wolkenstein T.** Electronic Processes on Semiconductor Surfaces during Chemisorption, Consultant Bureau. 1991
- **Hoenig, Lane.** *Oxygen an ZnO, Surface Science,* 1968, 11
- **W. Hellmich ; G. Müller ; G. Krötz.** *Verfahren und Vorichtung zur Bestimmung spezifischer Gas- und Ionenkonzentrationen, Deutsche Patentanmeldung,* 1995
- **U. Storm ; O. Bartels ; J. Binder.** A resistive gas sensor with elimination and utilization of parasitic electric fields. *Sensors and Actuators B: Chemical,* 2001, vol. 77 (1-2), 529-533
- **E. Comini ; A. Cristalli ; G. Faglia ; G. Sberveglieri.** Light enhanced gas sensing properties of indium oxide and tin dioxide sensors. *Sensors and Actuators B: Chemical,* 2000, vol. 65 (1-3), 260-263
- **L.I. Popova ; S.K. Andreev ; V.K. Gueorguiev ; N.D. Stoyanov.** Voltage dependence gas-sensing behaviour of SnO2 -gate FETs, Sens. *Actuators, B: Chem.,* 1994, vol. 19, 543-545